# EUROPÄISCHE PATENTSCHRIFT

(11) **EP 0 638 824 B1**
(45) Veröffentlichungstag und Bekanntmachung des Hinweises auf die Patenterteilung: **22.04.1998**
(21) Anmeldenummer: 94111196.5
(22) Anmeldetag: 19.07.1994
(51) Int. Cl.: G01S 17/02, G01S 3/786, F41G 3/06

(54) **Elektrooptisches Zielerfassungsgerät zum Vermessen von Flugzielen**
Electrooptical targeting device for tracking airborne targets
Dispositif électro-optique de détection de cibles pour le métrage de cibles volantes

(30) Priorität: 12.08.1993 DE 4327038
(43) Veröffentlichungstag der Anmeldung: 15.02.1995
(73) Patentinhaber: STN ATLAS Elektronik GmbH, D-28305 Bremen (DE)
(72) Erfinder: Ennenga, Luitjen, Dipl.-Ing., D-27798 Hude (DE); Weiland, Walter, Dipl.-Ing., D-28329 Bremen (DE)

(56) Entgegenhaltungen:
- DE-A- 2 650 138
- DE-A- 4 122 623
- GB-A- 2 226 466

## Beschreibung

Die Erfindung betrifft ein elektrooptisches Zielerfassungsgerät zum Vermessen von Flugzielen der im Oberbegriff des Anspruchs 1 definierten Gattung.

Bei solchen elektrooptischen Zielerfassungsgeräten, wie sie beispielsweise aus der DE 34 32 892 C2 bekannt sind, besteht die Forderung nach zuverlässiger Zielvermessung in großen Reichweiten, die meist immer mehr als 8 km betragen. Um bei dieser großen Reichweite auch Ziele mit kleinen Flächenabmessungen zuverlässig in ihrer Entfernung zu vermessen, muß der Lasersender des Laserentfernungsmessers eine möglichst große Strahldivergenz besitzen, damit der Bediener das Gerät nicht hochgenau ausrichten muß, um bei Auslösung des Laserschusses zur Entfernungsmessung das Ziel auch zuverlässig mit dem Laserstrahl zu treffen. Die große Strahldivergenz bedingt eine sehr hohe Energie des Lasersenders, damit vom Ziel noch genügend Energie zum Empfangen durch den optischen Empfänger des Laserentfernungsmessers reflektiert wird. Es werden daher bei solchen Zielerfassungsgeräten ausnahmslos Hochenergielaser eingesetzt, die äußerst kostspielig sind und das Zielerfassungsgerät in seinen Herstellungskosten erheblich verteuern.

Der Erfindung liegt die Aufgabe zugrunde, ein Zielerfassungsgerät der eingangs genannten Art zu schaffen, das unter Verzicht auf Hochleistungslaser und unter Verwendung von preiswerten Lasersendern mit vergleichsweise geringer Laserenergie hinreichend zuverlässige Entfernungsmeßwerte aus großen Reichweiten auch für kleinflächige Flugziele liefert.

Die Aufgabe ist bei einem Zielerfassungsgerät der im Oberbegriff des Anspruchs 1 angegebenen Gattung erfindungsgemäß durch die Merkmale im Kennzeichenteil des Anspruchs 1 gelöst.

Das erfindungsgemäße Zielerfassungsgerät hat den Vorteil, daß der Laserstrahl des Lasersenders sehr stark gebündelt werden kann, so daß die deutlich niedrigere Leistung des verwendeten preiswerten Lasersenders völlig ausreichend ist, damit vom Ziel in großer Entfernung noch genügend Energie reflektiert wird. Der mit der starken Bündelung einhergehende kleine Querschnitt des Laserstrahls hat trotzdem keine Verschlechterung der Gerätehandhabung durch den Bediener zur Folge, da die durch den kleineren Laserquerschnitt erforderliche wesentlich genauere Ausrichtung des Laserentfernungsmessers auf das Ziel von der erfindungsgemäß eingesetzten Zielverfolgungseinheit automatisch durchgeführt wird. Die Vergleichseinheit sorgt in Verbindung mit dem vorgegebenen Toleranzfenster, das an den kleinen Querschnitt des Laserstrahls angepaßt ist, dafür, daß bei einer momentanen Abweichung der Bildsensorachse vom Ziel, die ausreichen würde, daß der querschnittskleine Laserstrahl das Ziel nicht trifft sondern an diesem vorbeigeht und damit kein Entfernungsmeßwert erhalten wird, ein sog. Blindschuß zuverlässig unterbunden wird und dadurch nicht unnötigerweise Laserenergie verbraucht wird. Es ist damit sichergestellt, daß jede Auslösung des Laserentfernungsmessers durch den Bediener zu einem brauchbaren Entfernungsmeßwert führt, so daß die für den Lasersender kleinerer Leistung erforderliche Regenerationszeit zwischen aufeinanderfolgenden Laserschüssen nicht zu einer "Ausdünnung" der Entfernungsmessung führt, also weniger Entfernungsmeßwerte innerhalb einer Meßperiode zur Verfüung stehen als bei dem herkömmlichen Einsatz von Hochleistungslasern.

Die erfindungsgemäß eingesetzte Zielverfolgungseinheit, auch Tracker genannt, ist in Aufbau und Funktionsweise bekannt. Ein Beispiel für einen solchen Tracker, der zum Tracken, d.h. Nachführen der optischen Achse des Bildsensors entlang der Bahn des Flugziels, den Flächenschwerpunkt des Ziels und damit die Ziellage bestimmt und entsprechende Ablagesignale an die Nachführeinheit liefert, ist in der EP 0 217 871 B1 dargestellt und beschrieben. Ein solcher Tracker kann ohne weiteres in dem erfindungsgemäßen Zielerfassungsgerät eingesetzt werden, wobei dessen zweiter Trackmodus, nämlich Ziellagebestimmung durch Korrelation, ungenutzt bleibt.

Vorteilhafte Ausführungsformen des erfindungsgemäßen Zielerfassungsgeräts mit zweckmäßigen Weiterbildungen und Ausgestaltungen der Erfindung ergeben sich aus den weiteren Ansprüchen.

Die Erfindung ist anhand eines in der Zeichnung dargestellten Ausführungsbeispiels im nachfolgenden näher beschrieben. Es zeigen:
- Fig. 1: ein Blockschaltbild eines elektrooptischen Zielerfassungsgeräts zum Vermessen von Flugzielen,
- Fig. 2: ausschnittsweise eine vergrößerte Darstellung des Zielgebiets auf dem Monitor des Zielerfassungsgeräts in Fig. 1.

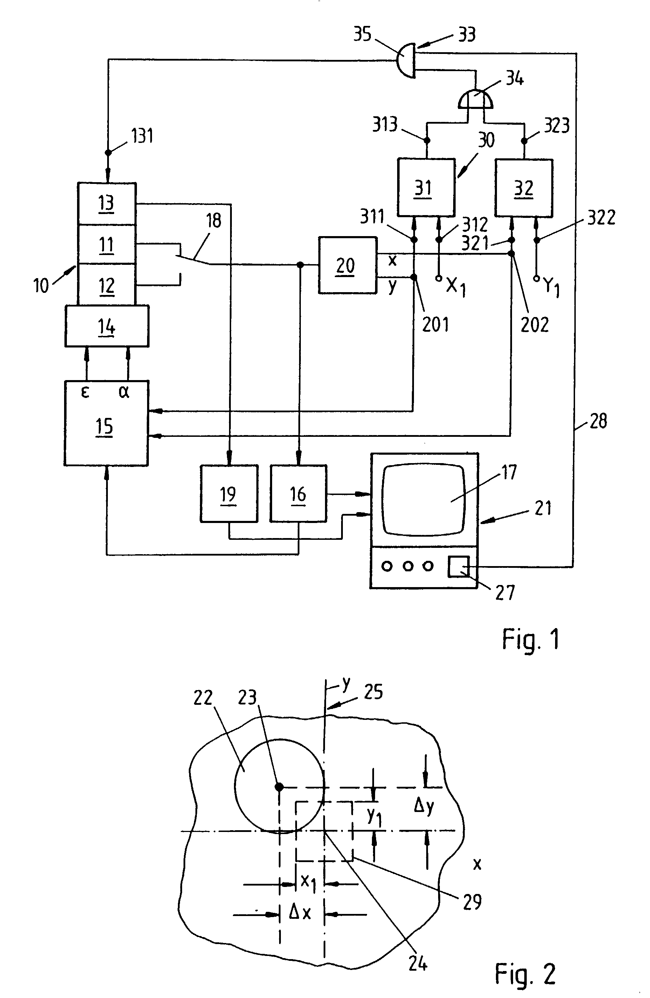

Das in Fig. 1 im Blockschaltbild dargestellte elektrooptische Zielerfassungsgerät zum Vermessen von Flugzielen weist einen Bildsensor 10 und einen Laserentfernungsmesser 13 mit Lasersender und optischem Empfänger auf, die gemeinsam auf einer Stabilisierungsplattform 14 angeordnet sind. Die Plattform 14 wird von einer Antriebseinheit 15 in Azimut und Elevation verstellt. Der Bildsensor 10 besteht aus einer Tagsicht- oder Videokamera 11 und einer Nachtsicht- oder Infrarotkamera 12, auch Wärmebildkamera genannt, die wahlweise, je nach Umgebungsbedingungen, als Bildsensor 10 eingesetzt werden. Dem Bildsensor 10 ist eine Bildverarbeitungseinheit 16 nachgeordnet, die eine Schaltungsstufe zur automatischen Zielauffassung und eine Schaltungsstufe zur Bilddarstellung aufweist, an die ein Monitor 17 einer Bedien- und Anzeigevorrichtung 21 angeschlossen ist. In der Schaltungsstufe zur automatischen Zielauffassung werden im aufgenommenen Bild des Bildsensors 10 enthaltene Objekte automatisch gesucht, deren Bildposition bestimmt und der Schwenkvorgang der Stabilisierungsplattform 14 durch die Antriebseinheit 15 nach erfolgreicher Objektsuche unterbrochen. Über den Bildschirm des Monitors 17 läßt sich das gefundene Objekt visuell identifizieren, wozu die Schaltungsstufe zur Bilddarstellung noch eine Sehfeldumschaltung, auch Gesichtsfeldumschaltung genannt, besitzt, durch welche eine lupenähnliche Bildvergrößerung auf dem Monitor 17 bewirkt werden kann. Dabei kann mittels eines Wahlschalters 18 die Videokamera 11 oder die Infrarotkamera 12 als Bildsensor 10 eingesetzt werden. Dem Empfänger des Laserentfernungsmessers 13 ist ein Entfernungsrechner 19 nachgeschaltet, der nach Auslösen eines Laserschusses im Lasersender aus der Laufzeit des vom Ziel reflektierten Laserimpulses die Entfernung zum Ziel berechnet und im Monitor 17 zur Anzeige bringt.

An dem Bildsensor 10 bzw. an dem Ausgang des Wahlschalters 18 ist weiterhin eine automatische Zielverfolgungseinheit, im folgenden kurz Tracker 20 genannt, angeschlossen, deren Ausgänge mit der Antriebseinheit 15 verbunden sind. Der Tracker 20 vermißt in bekannter Weise permanent die Lage des Ziels relativ zur optischen Achse des Bildsensors 10 und liefert an seinen Ausgängen der Ablage des Ziels von der Bildsensorachse entsprechende Korrektursignale. Der hier verwendete Tracker 20 bestimmt dabei als relative Ziellage die Koordinaten des Schwerpunkts der Zielfläche innerhalb eines orthogonalen Koordinatensystems, dessen Ursprung mit der Bildsensorachse zusammenfällt, so daß an seinen Ausgängen 201 und 202 jeweils ein der Horizontalkoordinate Δx des Zielflächenschwerpunkts entsprechendes und ein der Vertikalkoordinate Δy entsprechendes Korrektursignal ansteht. Der Aufbau und die Wirkungsweise des Trackers 20 sind an sich bekannt und beispielsweise in der EP 0 217 871 B1 beschrieben. Von den beiden Modi des dort beschriebenen "Dual Mode Trackers" würde hier lediglich der sog. "centroid mode" genutzt.

In der in Fig. 2 ausschnittsweise dargestellten Bildvergrößerung des vom Bildsensor 10 nach beendeter Objektsuche aufgenommenen Bildes, die nach in der Schaltungsstufe zur Bilddarstellung in der Bildverarbeitungseinheit 16 vorgenommenen Gesichtsfeldumschaltung auf dem Monitor 17 der Bedien- und Anzeigevorrichtung 21 abgebildet wird, läßt sich die beschriebene Funktion des Trackers 20 verdeutlichen. Dort ist die abgebildete Zielfläche mit 22 und deren Schwerpunkt mit 23 bezeichnet. Die optische Achse des Bildsensors 10, mit der die optische Achse von Lasersender und -empfänger des Laserentfernungsmessers 13 fluchtet, ist mit 24 gekennzeichnet, und das orthogonale Koordinatensystem mit seiner y- und x-Achse ist mit dem Bezugszeichen 25 gekennzeichnet. Wie bereits ausgeführt, bestimmt der Tracker 20 fortlaufend die Ablagekoordinaten Δx und Δy des Schwerpunkts 23 von der optischen Achse 24 des Bildsensors 10, also die Koordinaten des Schwerpunktes 23 im Koordinatensystem 25, und legt an seinen Ausgang 201 ein der Horizontalablage Δx entsprechendes x-Korrektursignal und an seinen Ausgang 202 ein der Vertikalablage Δy entsprechendes y-Korrektursignal. Die beiden Ausgänge 201 und 202 sind an die Antriebseinheit 15 angeschlossen, welche entsprechend den Korrektursignalen die Stabilisierungsplattform 15 um einen solchen Azimutwinkel α und Elevationswinkel ε schwenkt, daß die Zielablage kompensiert wird und die Bildsensorachse 24 auf den Schwerpunkt 23 der Zielfläche 22 hingeführt wird.

Zusätzlich zur automatischen Zielpositionsbestimmung kann das Zielerfassungsgerät mit Hilfe des Laserentfernungsmessers 13 auch die Entfernung zum Ziel vermessen. Hierzu hat der Bediener mit Hilfe einer an der Bedien- und Anzeigevorrichtung 21 vorgesehenen Auslösetaste 27, die über eine Signalleitung 28 mit einem Meßauslöseeingang 131 des Laserentfernungsmessers 13 verbunden ist, den Entfernungsmeßvorgang auszulösen. Mit dem Auslösesignal wird der Lasersender aktiviert, der einen eng gebündelten Meßstrahl, d.h. einen Meßstrahl mit relativ kleiner Querschnittsfläche, längs der optischen Achse des Laserentfernungsmessers 13 aussendet. Der Meßstrahl besteht aus einem einzelnen Laserimpuls oder einer Mehrzahl von aufeinanderfolgenden Laserimpulsen. Der Laserimpuls wird vom Ziel reflektiert und von dem optischen Empfänger des Laserentfernungsmessers 13 empfangen. Die Zeit zwischen dem Aussenden des Laserimpulses und dem Empfangen des Laserimpulses wird von dem Entfernungsrechner 19 gemessen und daraus die Entfernung des Ziels bestimmt.

Bei dem Laserentfernungsmesser 13 wird aus wirtschaftlichen Gründen ein Lasersender mit relativ geringer Leistung eingesetzt. Damit ein Ziel in großer Entfernung den Laserimpuls noch mit für den Empfang durch den optischen Empfänger ausreichender Energie reflektiert, wird der Meßstrahl extrem stark gebündelt, weist beispielsweise eine Strahldivergenz von ≤0,5 mrad auf. Bei dem dadurch erhaltenen sehr kleinen Meßstrahlquerschnitt, der auch bei großer Zielentfernung wesentlich kleiner ist als die Zielfläche, ist es möglich, daß bei zu großer Ablage der optischen Achse 24 des Bildsensors 10 vom Ziel während des Trackvorgangs des Trackers 22 der Laserimpuls, der längs der optischen Achse 24 des Bildsensors 10 ausgesendet wird, das Ziel nicht trifft, sondern an diesem vorbeigeht. Damit wird der Laserimpuls nicht reflektiert und eine Entfernungsmessung ist nicht möglich. Wegen der geringen Leistung des Lasersenders ist bis zum Aussenden des nächsten Laserimpulses ein für die Regeneration des Lasersenders erforderliche Wartezeit einzuhalten. Damit durch den eingesetzten leistungsarmen Lasersender die Leistungsmerkmale des Zielerfassungsgeräts nicht beeinträchtigt werden und ein ausreichend häufiges Vermessen der Zielentfernung ermöglicht wird, ist ein Toleranzfeld 29 (Fig. 2) mit einer Feldfläche, die kleiner ist als der Querschnitt des Meßstrahls am in maximaler Entfernung liegenden Zielort oder höchstens gleich groß ist, symmetrisch um die Bildsensorachse 24 aufgespannt und eine Vergleichseinheit 30 (Fig. 1) vorgesehen, welche die relative Ziellage mit dem Toleranzfeld 29 vergleicht und bei einer Lage des Ziels außerhalb des Toleranzfeldes 29 ein Sperrsignal generiert, welches das Auslösen des Laserentfernungsmessers 13 durch den Bediener blockiert.

Zur Realisierung dieses Toleranzfensters 29 und zur Generierung des Sperrsignals weist die Vergleichseinheit 30 zwei Komparatoren 31, 32 mit jeweils zwei Eingängen 311 und 312 bzw. 321 und 322 und einem Ausgang 313 bzw. 323 auf. Der Eingang 311 des Komparators 31 ist mit dem Ausgang 201 des Trackers 20 und der Eingang 321 des Komparators 32 mit dem Ausgang 202 des Trackers 20 verbunden. Die beiden anderen Eingänge 312 und 322 der Komparatoren 31, 32 sind jeweils mit einem Schwellwert belegt. Durch diese beiden Schwellwerte wird das Toleranzfeld 29 vorgegeben, das durch zwei Feldkoordinaten x₁ und y₁ im orthogonalen Koordinatensystem 25 festgelegt ist. Dabei entspricht der Schwellwert am Eingang 312 des Komparators 31 der Feldkoordinate x₁ des Toleranzfelds 29 und der Schwellwert am Eingang 322 des Komparators 32 der vertikalen Feldkoordinate y₁ des Toleranzfelds 29. Die Ausgänge 313 und 323 der beiden Komparatoren 31, 32, an denen jeweils ein Sperrsignal auftritt, wenn das Signal an dem Eingang 311 bzw. 321 größer ist als der Schwellwert am anderen Eingang 312 bzw. 322, sind mit einer Torschaltung 33 verbunden, welche die Signalleitung 28 sperrt, solange am Ausgang 313 oder am Ausgang 323 der beiden Komparatoren 31, 32 ein Sperrsignal vorhanden ist. In einfachster Weise besteht die Torschaltung 33 aus einem AND-Gatter 35, dessen einer Eingang mit der Signalleitung 28 und dessen anderer Eingang über ein OR-Gatter 35 mit den Ausgängen 313 und 323 der beiden Komparatoren 31, 32 verbunden ist. Der Ausgang des AND-Gatters 35 ist mit dem Meßauslöseeingang 131 des Laserentfernungsmessers 13 verbunden. Durch die Vergleichseinheit 30 und die Torschaltung 33 ist sichergestellt, daß im Moment des Auslösens des Laserentfernungsmessers 13 zur Zielentfernungsmessung die Ablage des Ziels von der Bildsensorachse 24 und damit vom Lasermeßstrahl so klein ist, daß der Lasermeßstrahl mit ausreichender Sicherheit das Ziel trifft und an diesem reflektiert wird. Ist während des Trackvorgangs die Zielablage vorübergehend zu groß, so daß der Laserimpuls am Ziel vorbeigehen würde, ist das Auslösen eines Entfernungsmeßvorgangs so lange blockiert, bis die Stabilisierungsplattform 14 soweit nachgeführt ist, daß der Zielschwerpunkt 23 wieder innerhalb des Toleranzfensters 29 liegt.

## Patentansprüche

1. Elektrooptisches Zielerfassungsgerät zum Vermessen von Flugzielen, mit einem Bildsensor (10), z. B. Video- und/oder Infrarotkamera (11, 12), und mit einem einen Lasermeßstrahl aussendenden Laserentfernungsmesser (13), die gemeinsam auf einer Stabilisierungsplattform (14) angeordnet sind, und mit einer die Stabilisierungsplattform (14), zu deren Schwenkung in Elevation (ε ) und Azimut (α) antreibenden Antriebseinheit (15), dadurch gekennzeichnet, daß an dem Bildsensor (10) eine automatische Zielverfolgungseinheit (Tracker 20) angeschlossen ist, die permanent die Lage des Ziels relativ zur optischen Achse (24) des Bildsensors (10) vermißt und der Ablage des Ziels von der Bildsensorachse (24) entsprechende Korrektursignale (x, y) liefert, daß die Korrektursignale (x, y) zur Nachführung der Stabilisierungsplattform (14) in einer die Zielablage kompensierenden Weise der Antriebseinheit (15) zugeführt sind, daß um die Achse (24) des Bildsensors (10) ein Toleranzfeld (29) gelegt ist, dessen Feldfläche gleich oder kleiner ist als der Querschnitt des Lasermeßstrahls am Zielort, und daß eine Vergleichseinheit (30) die relative Ziellage mit dem Toleranzfeld (29) vergleicht und bei Lage des Ziels außerhalb des Toleranzfeldes (29) ein Sperrsignal zur Auslöseblockierung des Laserentfernungsmessers (13) generiert.

2. Zielerfassungsgerät nach Anspruch 1, dadurch gekennzeichnet, daß in einer Signalleitung (28) zum willkürlichen Auslösen einer Entfernungsmessung durch den Laserentfernungsmesser (13) eine Torschaltung (33) angeordnet ist und daß das Sperrsignal am Steuereingang der Torschaltung (33) anliegt.

3. Zielgerät nach Anspruch 1 oder 2, dadurch gekennzeichnet, daß die Zielverfolgungseinheit (Tracker 20) als relative Ziellage die Koordinaten (Δx, Δy) des Schwerpunktes (23) der Zielfläche (22) innerhalb eines orthogonalen Koordinatensystems (25) bestimmt, dessen Ursprung mit der optischen Achse (24) des Bildsensors (10) zusammenfällt, daß das Toleranzfeld (29) durch zwei Feldkoordinaten (x₁, y₁,) in dem orthogonalen Koordinatensystem (25) festgelegt ist und daß die Vergleichseinheit (30) jede Schwerpunktkoordinate (Δx, Δy) mit der zugeordneten Feldkoordinaten (x₁, y₁), vergleicht und bei deren Übersteigen das Sperrsignal generiert.

4. Zielerfassungsgerät nach Anspruch 3, dadurch gekennzeichnet, daß an getrennten Ausgängen (201, 202) der Zielverfolgungseinheit (Tracker 20) jeweils ein der Horizontalkoordinate (Δx) des Zielflächenschwerpunkts (23) entsprechendes und ein der Vertikalkoordinate (Δy) des Zielflächenschwerpunkts (23) entsprechendes Korrektursignal (x, y) ansteht, daß die Vergleichseinheit (30) zwei Komparatoren (31, 32) mit jeweils zwei Eingängen (311, 312 bzw. 321, 322) und einem Ausgang (313 bzw. 323) aufweist, daß die Ausgänge (201, 202) der Zielverfolgungseinheit (Tracker 20) mit jeweils einem Eingang (311 bzw. 321) eines Komparators (31 bzw. 32) verbunden sind, dessen anderer Eingang (312 bzw. 322) mit einem der Feldkoordinaten (x₁, y₁) des Toleranzfelds (29) entsprechenden Schwellwert belegt ist, und daß die Ausgänge (313, 323) beider Komparatoren (31, 32) mit dem Steuereingang der Torschaltung (33) verbunden sind.

5. Zielerfassungsgerät nach Anspruch 4, dadurch gekennzeichnet, daß die Torschaltung (33) ein AND-Gatter (35) aufweist, dessen Ausgang mit einem Meßauslöseeingang (131) des Laserentfernungsmessers (13) und dessen einer Eingang mit der Signalleitung (28) verbunden ist, und daß der andere, den Steuereingang der Torschaltung (33) bildende Eingang des AND-Gatters (35) über ein OR-Gatters (34) an jedem Ausgang (313, 323) der Komparatoren (31, 32) angeschlossen ist.

## Claims

1. Electrooptical targeting device for tracking airborne targets, with an image sensor (10), e.g. video and/or infrared camera (11, 12), and with a laser range finder (13) emitting a measurement laser beam, which are arranged jointly on a stabilisation platform (14), and with a drive unit (15) driving the stabilisation platform (14) to swivel it in elevation (ε) and azimuth (α), characterised in that an automatic target tracking unit (tracker 20) is connected to the image sensor (10), which permanently tracks the position of the target in relation to the optical axis (24) of the image sensor (10), and delivers correction signals (x, y) corresponding to the deviation of the target from the image sensor axis (24); that the correction signals (x, y) are supplied to the drive unit (15) in a manner so as to compensate for the target deviation for following the stabilisation platform (14); that a tolerance field (29) is located around the axis (24) of the image sensor (10), the field area of which is equal to or smaller than the cross-section of the measurement laser beam at the target location; and that a comparison unit (30) compares the relative target location with the tolerance field (29) and, when the target lies outside the tolerance field (29), generates a blocking signal to block actuation of the laser range finder (13).

2. Targeting device according to Claim 1, characterised in that a gate (33) is arranged in a signal line (28) for random actuation of a distance measurement through the laser range finder (13); and that the blocking signal lies at the control input of the gate (33).

3. Targeting device according to Claim 1 or 2, characterised in that the target tracking unit (tracker 20) determines as relative target position the coordinates (Δx, Δy) of the centre of gravity (23) of the target surface (22) within an orthogonal coordinate system (25), the origin of which coincides with the optical axis (24) of the image sensor (10); that the tolerance field (29) is fixed by two field coordinates (x₁, y₁) in the orthogonal coordinate system (25); and that the comparison unit (30) compares each centre of gravity coordinate (Δx, Δy) with the allocated field coordinates (x₁, y₁) and when they are exceeded, generates the blocking signal.

4. Targeting device according to Claim 3, characterised in that a respective correction signal (x, y) corresponding to the horizontal coordinate (Δx) of the target surface centre of gravity (23) and corresponding to the vertical coordinate (Δy) of the target surface centre of gravity (23) lies at separate outputs (201, 202) of the target tracking unit (tracker 20); that the comparison unit (30) has two comparators (31, 32) each with two inputs (311, 312 and 321, 322) and an output (313 and 323); that the outputs (201, 202) of the target tracking unit (tracker 20) are respectively connected to an input (311 and 321), the other input (312 or 322) of which is furnished with a threshold value corresponding to the field coordinate (x₁, y₁) of the tolerance field (29); and that the outputs (313, 323) of both comparators (31, 32) are connected to the control input of the gate (33).

5. Targeting device according to Claim 4, characterised in that the gate (33) has an AND circuit (35), the output of which is connected to a measurement actuation input (131) of the laser range finder (13) and an input of which is connected to the signal line (28); and that the other input of the AND circuit (35) forming the control input of the gate (33) is connected to each output (313, 323) of the comparators (31, 32) via an OR circuit (34).

## Revendications

1. Instrument d'acquisition électro-optique servant au repérage d'objectifs aériens, équipé d'un capteur d'images (10), p. ex. caméra vidéo et/ou caméra infrarouge (11, 12), et d'un télémètre à laser émettant un faisceau de mesure laser (13) qui sont logés sur une plate-forme de stabilisation (14), et muni d'une commande (15) servant à orienter la plate-forme de stabilisation (14) en élévation (ε) et azimut (α), caractérisé en ce qu'un ensemble de poursuite automatique (tracker 20) qui relève continuellement la position de l'objectif par rapport à l'axe optique (24) du capteur d'images (10) et fournit des signaux correctifs (x, y) correspondant à l'écart de l'objectif par rapport à l'axe (24) du capteur d'images est connecté au capteur d'images (10), que les signaux correctifs (x, y) pour l'asservissement de la plate-forme de stabilisation (14) sont transmis à la commande (15) de façon à compenser l'écart, qu'une zone de tolérance (29) dont la surface est égale ou inférieure à la section du faisceau de mesure laser dans la position de l'objectif est prévue autour de l'axe (24) du capteur d'images, et qu'une unité de comparaison (30) compare la position relative de l'objectif avec la zone de tolérance (29) et génère un signal de blocage pour bloquer le déclenchement du télémètre laser (13) lorsque l'objectif est situé en dehors de la zone de tolérance (29).

2. Instrument d'acquisition suivant la revendication 1, caractérisé en ce qu'un circuit de porte (33) est prévu dans la ligne des signaux (28) servant à déclencher volontairement une télémesure par le télémètre laser (13) et que le signal de blocage est appliqué à l'entrée de commande du circuit de porte (33).

3. Instrument d'acquisition suivant l'une quelconque des revendications 1 ou 2, caractérisé en ce que l'ensemble de poursuite (tracker 20) détermine comme position relative de l'objectif les coordonnées (Δx, Δy) du centre de gravité (23) de la surface de l'objectif (22) à l'intérieur d'un système de coordonnées orthogonal (25) dont l'origine coïncide avec l'axe optique (24) du capteur d'images (10), que la zone de tolérance (29) est définie par deux coordonnées de zone (x₁, y₁) dans le système de coordonnées orthogonal (25) et que l'unité de comparaison (30) compare chaque coordonnée du centre de gravité (Δx, Δy) avec la coordonnée de zone associée (x₁, y₁) et génère un signal de blocage si celle-ci est dépassée.

4. Instrument d'acquisition suivant la revendication 3, caractérisé en ce qu'à chacune des sorties séparées (201, 202) de l'ensemble de poursuite (tracker 20) est appliqué un des signaux correctifs (x, y) correspondant respectivement à la coordonnée horizontale (Ax) du centre de gravité de la surface de l'objectif (23) et à la coordonnée verticale (Ay) du centre de gravité de la surface de l'objectif (23), que l'unité de comparaison (30) est dotée de deux comparateurs (31, 32), chacun disposant de deux entrées (311, 312 et 321, 322) et d'une sortie (313 et 323), que les sorties (201, 202) de l'ensemble de poursuite (tracker 20) sont liées chacune à l'une des entrées (311 et 321) de l'un des comparateurs (31 et 32) dont l'autre entrée (312 ou 322) est affectée d'une valeur de seuil correspondant aux coordonnées de zone (x₁, y₁) de la zone de tolérance (29) et que les sorties (313, 323) des deux comparateurs (31, 32) sont liées à l'entrée du circuit de porte (33).

5. Instrument d'acquisition suivant la revendication 4, caractérisé en ce que le circuit de porte (33) possède une porte ET (35) dont la sortie est liée à une entrée de déclenchement de mesure (131) du télémètre à laser (13) et dont l'une des entrées est liée à la ligne de signaux (28), et que l'autre entrée, constituant l'entrée de commande du circuit de porte (33) de la porte ET (35), est liée à travers une porte OU (34) à chacune des sorties (313, 323) des comparateurs (31, 32).
